# EUROPÄISCHE PATENTSCHRIFT

(11) **EP 0 481 189 B1**
(45) Veröffentlichungstag und Bekanntmachung des Hinweises auf die Patenterteilung: **20.04.1994**
(21) Anmeldenummer: 91113976.4
(22) Anmeldetag: 21.08.1991
(51) Int. Cl.: B60C 23/04

(54) **Einrichtung zur Überwachung des Druckes von Fahrzeugreifen**
Device for monitoring the pressure of vehicle tires
Dispositif de surveillance de la pression des pneumatiques de véhicule

(30) Priorität: 15.10.1990 DE 4032675
(43) Veröffentlichungstag der Anmeldung: 22.04.1992
(73) Patentinhaber: WABCO Vermögensverwaltungs-GmbH, D-30432 Hannover (DE)
(72) Erfinder: Bartscher, Peter, W-3000 Hannover 91 (DE); Stegemann, Gerhard, W-3216 Salzhemmendorf 4 (DE); Herzog, Stefan, W-3000 Hannover 91 (DE); Ulrich, Helmut, W-3257 Springe 1 (DE)
(74) Vertreter: Schrödter, Manfred, Dipl.-Ing.

(56) Entgegenhaltungen:
- EP-A- 0 159 133
- DE-A- 2 813 058
- US-A- 4 330 774

## Beschreibung

Die Erfindung betrifft eine Einrichtung zur Überwachung des Druckes von Fahrzeugreifen gemäß dem Oberbegriff des Patentanspruchs 1.

Eine solche Einrichtung ist durch die US-A-4 330 774 vorbekannt. Die vorbekannte Einrichtung tastet mit einer druckempfindlichen Einrichtung den Reifendruck ab und soll einen nicht angemessenen Reifendruck durch ein Signal anzeigen. Die druckempfindliche Einrichtung weist einen als Stellglied dienenden Kolben auf, der über einen Druckeinlaß der druckempfindlichen Einrichtung, welcher mit dem Reifen verbunden ist, mit dem Reifendruck gegen eine als Rückstellkraft dienende Feder beaufschlagbar ist.

Zwischen dem Druckeinlaß und einer von dem als Stellglied dienenden Kolben begrenzten Druckmittelkammer ist eine Ventileinrichtung angeordnet, die einen vom Reifendruck beaufschlagten Schaltkolben aufweist.

Bei Vorhandensein eines vorbestimmten Reifendruckes befindet sich die Ventileinrichtung in einer ersten Schaltstellung, in welcher sie die vom Kolben (Stellglied) begrenzte Druckmittelkammer mit dem Reifen verbindet. Der Kolben (Stellglied) wird vom Reifendruck gegen die Kraft der Feder in seiner nicht anzeigenden Stellung gehalten.

Fällt der Druck im Reifen, bedingt durch einen Reifendefekt, unter den vorbestimmten Wert, gelangt die Ventileinrichtung in eine zweite Schaltstellung, in welcher sie die Verbindung zwischen der vom Kolben (Stellglied) begrenzten Druckmittelkammer und dem Reifen unterbricht und die Druckmittelkammer mit einem zur Atmosphäre hin führenden Auslaß der Ventileinrichtung verbindet. Die Druckmittelkammer wird schlagartig entlüftet und der Kolben (Stellglied) wird durch die Kraft der Feder in seine einen Reifendefekt bzw. in seine einen unzulässigen Druckabfall anzeigende Stellung gebracht und in dieser Stellung gehalten, bis die Ursache des Druckabfalls beseitigt ist.

Wird die vorbekannte Einrichtung zur Überwachung von Zwillingsreifen vorgesehen, kann es passieren, daß bei einem Defekt an einem der beiden Reifen ein Druckausgleich durch Nachströmen von Luft aus dem intakten Reifen in den defekten Reifen erfolgt, bis auch der intakte Reifen so weit unter den Betriebsdruck abgefallen ist, daß dieser seine Betriebsbereitschaft, wenigstens bis zum Auswechseln des defekten Reifens, verliert.

Der Erfindung liegt daher die Aufgabe zugrunde, eine Einrichtung der eingangs erwähnten Art so zu verbessern, daß bei einem Defekt an einem der beiden Reifen nur ein begrenzter Druckausgleich zwischen den beiden Reifen erfolgen kann.

Diese Aufgabe wird durch die im Patentanspruch 1 angegebene Erfindung gelöst. Weiterbildungen und vorteilhafte Ausführungsbeispiele sind in den Unteransprüchen angegeben.

Die Erfindung hat den Vorteil, daß bei einem Defekt an einem der beiden Reifen nur ein begrenzter Druckausgleich zwischen den beiden Reifen, bis zur Umschaltung der druckempfindlichen Einrichtung auf die Signalerzeugung, erfolgen kann.

Ein weiterer Vorteil der Erfindung ist darin zu sehen, daß auch bei einer Unterbrechung der Verbindung zwischen einem der Zwillingsreifen und der druckempfindlichen Einrichtung, z. B. hervorgerufen durch eine fehlerhafte Montage oder eine Zerstörung während des Fahrbetriebes, der Druck des nicht von dem Defekt betroffenen Reifens bis zur Anzeige des Defektes nur geringfügig absinken kann.

Die Erfindung wird anhand eines Ausführungsbeispiels, das in der Zeichnung dargestellt ist, näher erläutert.
Es zeigen:
- Fig. 1:: eine schematisch dargestellte Einrichtung zur Überwachung des Druckes eines Fahrzeugreifens, welche nach dem Prinzip der Einrichtung gemäß dem Stand der Technik arbeitet und
- Fig. 2:: eine Einrichtung gemäß Fig. 1 mit einer Ausbildung zur Überwachung des Druckes von Zwillingsreifen.

Die Einrichtung ist dafür vorgesehen, einen nicht angemessenen Reifendruck anzuzeigen.

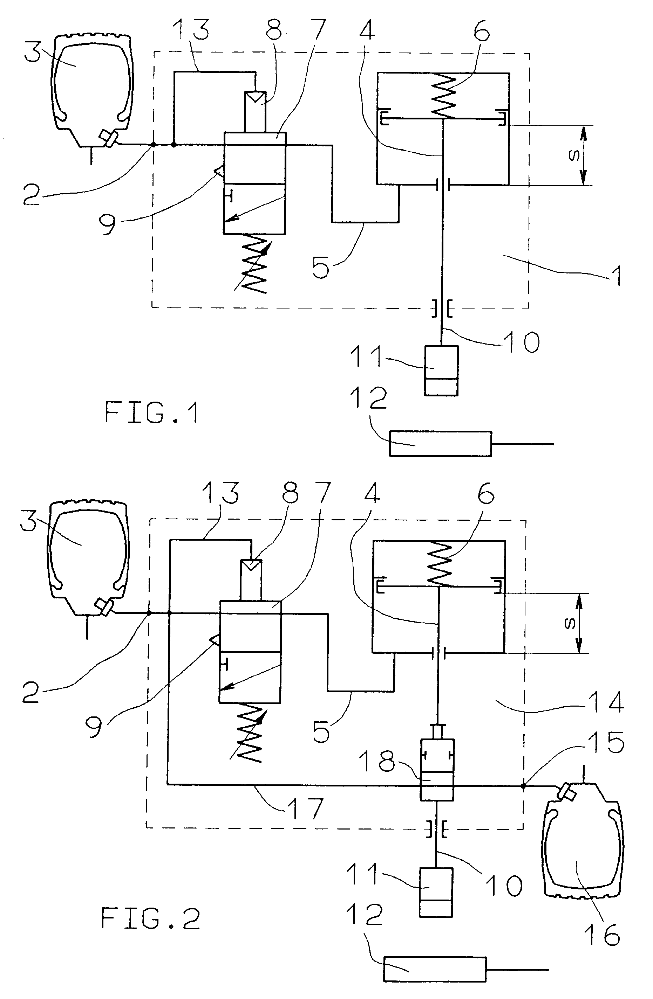

In den Figuren 1 und 2 sind gleiche Bauelemente, soweit deren Wiederholung dem besseren Verständnis dient, mit gleichen Positionsnummern versehen.

Die Fig. 1 zeigt eine am Fahrzeugrad angeordnete druckempfindliche Einrichtung (1) mit einem Druckeinlaß (2), der mit einem Fahrzeugreifen (3) verbunden und mit dem Reifendruck beaufschlagbar ist. Ein Stellglied (4) ist über eine Druckleitung (5) mit dem Druckeinlaß (2) verbindbar und gegen eine aus einer Druckfeder (6) gebildeten Rückstellkraft mit dem Reifendruck beaufschlagbar. Zwischen dem Druckeinlaß (2) und dem Stellglied (4) ist eine Ventileinrichtung (7) vorgesehen. Die Ventileinrichtung (7) ist mit dem Reifendruck steuerbar und weist einen mit dem Reifendruck beaufschlagten Steuereinlaß (8) auf. Die Schaltung der ventileinrichtung (7) erfolgt in Abhängigkeit von dem Reifendruck. Der Schaltpunkt der Ventileinrichtung (7) ist auf einen vorgegebenen Reifendruck einstellbar.

Die Ventileinrichtung (7) dient in einer ersten Schaltstellung bei einem vorgegebenen oder oberhalb eines vorgegebenen Reifendruckes zur Verbindung des Druckeinlasses (2) mit dem Stellglied (4). In einer zweiten Schaltstellung unterhalb des vorgegebenen Reifendruckes dient die Ventileinrichtung (7) zur Trennung des Druckeinlasses (2) von dem Stellglied (4) und zur Verbindung des Stellgliedes (4) mit einem Auslaß (9) zur Atmosphäre.

Das Stellglied (4) kann einen Hub ausführen, der zur Erzeugung eines Stellweges (S) genutzt wird. Mit dem Stellglied (4) ist ein Übertragungsmechanismus (10) in der Art eines Gestänges verbunden, das auch flexibel in der Art eines Bowdenzuges ausgebildet sein kann. Mit dem Übertragungsmechanismus (10) ist ein signalgebendes Bauteil (11) relativ zu einem Sensor (12) bewegbar. Die Anordnung des Bauteils (11) zu dem Sensor (12) ist so gestaltet, daß der Sensor (12) die Relativbewegung des Bauteils (11) registrieren und in entsprechende Steuersignale umwandeln kann.

Das Bauteil (11) kann z. B., wie in der De 28 13 058 C2 offenbart, in einem der Sensierung der Radgeschwindigkeit dienenden Zahnkranz einer ABS-Einrichtung angeordnet sein, so daß eine dadurch erzielte Modifizierung des ABS-Signals als Reifendrucksignal erkennbar gemacht werden kann.

Die Wirkungsweise dieser Einrichtung gemäß Fig. 1 ist wie folgt:

Steht ein Reifendruck, der gleich dem oder höher als der vorgegebene Reifensolldruck ist am Druckeinlaß (2) und damit über eine Steuerdruckleitung (13) an dem Steuereinlaß (8) an, dann befindet sich die Ventileinrichtung (7), wie in der Zeichnung dargestellt, in einer Schaltstellung, in der das Druckmeßglied (4) mit dem Reifendruck gegen die Rückstellkraft (6) beaufschlagt ist. Das Stellglied (4) ist in einer Position gehalten, in der das signalgebende Bauteil (11) vom Sensor (12) wegbewegt, kein Signal erzeugt.

Bei Absinken des Reifendruckes unter den vorgegebenen Reifensolldruck schaltet die Ventileinrichtung (7) nach Überwindung einer Schaltschwelle in eine Schaltstellung, in der das Stellglied (4) über den Auslaß (9) druckentlastet ist. Durch die nun überwiegende Kraft der Druckfeder (6) durchfährt das Stellglied (4) den Stellweg (S), der über den Übertragungsmechanismus (10) auf das signalgebende Bauteil (11) übertragen wird. Durch Annäherung des signalgebenden Bauteils (11) an den Sensor (12) wird ein Signal erzeugt, das einen unter den Solldruck abgefallenen Reifendruck, bzw. einen Druckverlust am Druckeinlaß (2), signalisiert.

Der vorstehend beschriebene Zustand der Signalerzeugung der druckempfindlichen Einrichtung (1) bleibt so lange erhalten, bis der Reifen durch Wiederauffüllen den vorgegebenen Reifensolldruck erreicht hat. Hierdurch wird wieder der vorstehend beschriebene Betriebszustand der druckempfindlichen Einrichtung (1) hergestellt, in dem das signalgebende Bauteil (11) vom Sensor wegbewegt, kein Signal erzeugt.

Selbstverständlich kann der Stellweg (S) auch zur Betätigung einer nicht dargestellten mechanischen Anzeigevorrichtung genutzt werden, die dann anstelle des signalgebenden Bauteils (11) und des Sensors (12) z. B. ein optisch oder akustisch wahrnehmbares Signal erzeugen kann.

Die Fig. 2 zeigt eine druckempfindliche Einrichtung (14), die eine Erweiterung der druckempfindlichen Einrichtung gemäß Fig. 1 darstellt, jedoch mit zusätzlichen Elementen versehen ist, die eine Überwachung des Druckes von Zwillingsreifen ermöglichen. Die druckempfindliche Einrichtung (14) ist über den Druckeinlaß (2) mit dem Reifen (3) und über einen weiteren Druckeinlaß (15) mit einem zweiten Reifen (16) verbunden. Über eine Druckleitung (17) sind die beiden Druckeinlässe (2) und (15) miteinander verbunden. Die an den Druckeinlässen (2) und (15) vorhandenen Reifendrücke wirken gemeinsam über die Steuerdruckleitung (13) auf den Steuereinlaß (8) der Ventileinrichtung (7).

Die Druckeinlässe (2) und (15) sind mit einer in der Druckleitung (17) angeordneten Ventileinrichtung (18) verbindbar oder voneinander trennbar. Die Ventileinrichtung (18) ist mit dem Stellglied (4) betätigbar. Der mit dem Stellglied (4) erzeugbare Stellweg (S) wird nicht nur als Antrieb für die Relativbewegung des Bauteils (11) zum Sensor (12) genutzt, sondern dient hier auch zur Betätigung der Ventileinrichtung (18).

Die Wirkungsweise der Einrichtung gemäß Fig. 2 ist wie folgt:

In dem dargestellten Betriebszustand der druckempfindlichen Einrichtung (14) steht in der Drucksteuerleitung (13) ein durch Druckausgleich zwischen den Reifen (3) und (16) gebildeter Steuerdruck an, der nicht unterhalb des vorgegebenen Solldruckes liegt. Die Ventileinrichtung (7) ist daher auf Durchgang geschaltet, so daß das Stellglied (4) mit dem durch den Druckausgleich gebildeten Druck beaufschlagt ist. Die so erzeugte Betriebsstellung des Stellgliedes bewirkt, daß auch die Ventileinrichtung (18) auf Durchgang geschaltet ist, in der die Druckeinlässe (2) und (15) miteinander verbunden sind. Das Bauteil (11) befindet sich gegenüber dem Sensor (12) in einer Position, in der keine Signalerzeugung erfolgt.

Bei einem Defekt eines der beiden Reifen (3) oder (16) sinkt mit der Wirkung des Druckausgleiches der Steuerdruck in der Steuerdruckleitung (13 unter den vorgegebenen Reifendruck ab. Die Ventileinrichtung (7) nimmt dadurch die Schaltstellung ein, in der der auf das Stellglied (4) gerichtete Druck in die Atmosphäre abgeführt ist und damit der Stellweg (S) erzeugt wird. Der Stellweg (S) bewirkt die Bewegung der Ventileinrichtung (18) in die Schließstellung, in der die beiden Reifen (3) und (16) schlagartig voneinander getrennt sind. Hierdurch ist ein weiterer Druckausgleich im Sinne des Druckverlustes zwischen den Reifen (3) und (16) unterbunden. Der defekte Reifen (3) oder (16) kann weiterhin Druck verlieren, jedoch ist der intakte Reifen gegen weiteren Druckverlust gesichert. Die Schaltzyklen der Ventileinrichtungen (7) und (18) sind so aufeinander abgestimmt, daß das Umschalten auf die Signalerzeugung bzw. das Trennen der Reifen (3) und (16) voneinander unmittelbar nach dem Unterschreiten des Reifensolldruckes schlagartig erfolgt.

## Patentansprüche

1. Einrichtung zur Überwachung des Druckes von Fahrzeugreifen, mit folgenden Merkmalen:
a) es ist eine am Fahrzeugrad angeordnete druckempfindliche Einrichtung (14) zum Abtasten des Reifendruckes vorgesehen, mit einem Druckeinlaß (2), der mit dem Reifen (3) verbunden ist;
b) es ist ein mit dem Reifendruck gegen eine Rückstellkraft beaufschlagbares Stellglied (4) vorgesehen, das zur Erzeugung eines einen Reifendruckabfall anzeigenden Stellweges (S) dient,
c) es ist eine zwischen dem Druckeinlaß (2) und dem Stellglied (4) angeordnete mit dem Reifendruck betätigbare Ventileinrichtung (7) vorgesehen, mit einem Steuereinlaß (8), der mit dem Reifendruck beaufschlagbar ist;
d) die Ventileinrichtung (7) dient in einer ersten Schaltstellung bei einem vorgegebenen oder oberhalb des vorgegebenen Reifendruckes zur Verbindung des Druckeinlasses (2) mit dem Stellglied (4);
e) die Ventileinrichtung (7) dient in einer zweiten Schaltstellung unterhalb des vorgegebenen Reifendruckes zur Trennung des Druckeinlasses (2) von dem Stellglied (4) und zur Verbindung des Stellgliedes (4) mit einem Auslaß (9) zur Atmosphäre
gekennzeichnet durch die folgenden Merkmale:
f) es ist ein weiterer Druckeinlaß (15) zur Überwachung des Druckes eines zweiten Fahrzeugreifens (16) vorgesehen;
g) der weitere Druckeinlaß (15) ist mit dem Druck des zweiten Reifens (16) beaufschlagt und über eine Druckleitung (17) mit dem Druckeinlaß (2) des ersten Reifens (3) verbunden;
h) es ist eine mit dem den Stellweg (S) erzeugenden Stellglied (4) betätigbare Ventileinrichtung (18) vorgesehen, die in der Druckleitung (17) angeordnet ist und zur Verbindung und Trennung der Druckeinlässe (2, 15) dient;
i) die mit dem Stellglied (4) betätigbare Ventileinrichtung (18) dient in einer ersten Schaltstellung bei dem vorgegebenen oder oberhalb des vorgegebenen Reifendrucks zur Verbindung und unterhalb des vorgegebenen Reifendruckes zur Trennung der Druckeinlässe.

2. Einrichtung nach Anspruch 1, dadurch gekennzeichnet, daß zur Erzeugung des einen Reifendruckabfall anzeigenden Stellweges (S) die auf das Stellglied (4) gegen den Reifendruck gerichtete Rückstellkraft (6) dient.

3. Einrichtung nach Anspruch 1, dadurch gekennzeichnet, daß ein Übertragungsmechanismus (10) zur Übertragung des Stellweges (S) auf einen den Stellweg (S) abtastenden Sensor (12) vorgesehen ist.

4. Einrichtung nach Anspruch 3, dadurch gekennzeichnet, daß der Übertragungsmechanismus (10) aus einem vorzugsweise elastischen Gestänge (10) in der Art eines Bowdenzuges gebildet ist.

5. Einrichtung nach Anspruch 1, dadurch gekennzeichnet, daß der mit dem Stellglied (4) erzeugbare Stellweg (S) zur Betätigung einer mechanischen Signaleinrichtung dient, mit der ein optisch oder akustisch wahrnehmbares Signal erzeugbar ist.

## Claims

1. A device for monitoring the pressure of vehicle tyres, having the following features:
a) a pressure-sensitive device (14) arranged on a vehicle wheel for detecting the tyre pressure is provided, with a pressure inlet (2) to which the tyre (3) is connected;
b) an actuator (4) arranged to be acted on by the tyre pressure against a restoring force is provided, which serves to generate a displacement stroke (S) indicating a drop in tyre pressure,
c) a valve arrangement (7) which is arranged to be operated by the tyre pressure is provided between the pressure inlet (2) and the actuator (4), having a control inlet (8) which is pressurized by the tyre pressure;
d) the valve arrangement (7) serves in a first position, at or above the predetermined tyre pressure, to connect the pressure inlet (2) and the actuator (4);
e) the valve arrangement (7) serves in a second position, below the predetermined tyre pressure, to isolate the pressure inlet (2) from the actuator (4) and to connect the actuator (4) to an outlet (9) leading to the atmosphere,
characterized by the following features:
f) a further pressure inlet (15) for monitoring the pressure of a second vehicle tyre (16) is provided;
g) the further pressure inlet (15) is pressurized with the pressure of the second tyre (16) and is connected by way of a pressure line (17) to the pressure inlet (2) of the first tyre (3);
h) a valve arrangement (18) arranged to be actuated with the actuator (4) generating the displacement stroke (S) is provided, which is arranged in the pressure line (17) and serves for connection and isolation of the pressure inlets (2, 15);
i) the valve arrangement (18) arranged to be actuated with the actuator (4) serves in a first position, at or above the predetermined tyre pressure, to connect the pressure inlets and, below the predetermined tyre pressure, serves to isolate the pressure inlets.

2. A device according to claim 1, characterized in that the restoring force (6) directed towards the actuator (4) against the tyre pressure serves to generate the displacement stroke (S) indicating a drop in tyre pressure.

3. A device according to claim 1, characterized in that a transmission mechanism (10) for transmitting the displacement stroke (S) to a sensor (12) detecting the displacement stroke (S) is provided.

4. A device according to claim 3, characterized in that the transmission mechanism (10) is constituted by a preferably resilient linkage (10) in the form of a Bowden cable.

5. A device according to claim 1, characterized in that the displacement stroke (S) which may be produced by the actuator (4) serves to operate a mechanical signalling device with which a visually or acoustically detectable signal may be generated.

## Revendications

1. Dispositif de surveillance de la pression des pneumatiques d'un véhicule, comportant les caractéristiques suivantes:
a) pour capter la pression des pneumatiques il est prévu un dispositif (14) disposé sur la roue du véhicule, sensible à la pression et présentant une entrée de pression (2) reliée avec le pneumatique (3);
Il est prévu un organe réglant (4) qui peut être soumis à la pression du pneumatique, à l'encontre d'une force de rappel, et qui sert à produire une course réglante (S) qui indique une chute de la pression du pneumatique,
c) il est prévu un robinet (7) qui est disposé entre l'entrée de pression (2) et l'organe réglant (4), qui peut être soumis à la pression du pneumatique et qui présente une entrée de commande (8) qui peut être soumise à la pression du pneumatique;
d) dans un première position de commutation, pour une pression du pneumatique égale ou supérieure à la pression prescrite, le robinet (7) sert à relier l'entrée de pression (2) avec l'organe réglant (4);
e) dans une seconde position de commutation, en-dessous de la pression du pneumatique prescrite, le robinet (7) sert à séparer l'entrée de pression (2) d'avec l'organe réglant (4) et à relier l'organe réglant (4) avec une sortie (9) à l'atmosphère,
dispositif caractérisé par les caractéristiques suivantes:
f) il est prévu une autre entrée de pression (15) pour surveiller la pression d'un second pneumatique (16) du véhicule;
g) l'autre entrée de pression (15) est soumise à la pression du second pneumatique (16) et, par l'intermédiaire d'une conduite de pression (17), elle est reliée avec l'entrée de pression (2) du premier pneumatique (3);
h) il est prévu un robinet (18) que peut manoeuvrer l'organe réglant (4) produisant la course réglante (S), qui est disposé dans la conduite de pression (17) et qui sert à relier et à séparer les entrées de pression (2, 15);
i) dans une première position de commutation, à la pression du pneumatique égale ou supérieure à la pression prescrite, le robinet (18) que peut manoeuvrer l'organe réglant (4) sert à relier les entrées de pression et, en dessous de la pression du pneumatique prescrite, à séparer les entrées de pression.

2. Dispositif selon la revendication 1, caractérisé par le fait que la force de rappel (6) exercée sur l'organe réglant (4) à l'encontre de la pression du pneumatique sert à produire la course réglante (S) qui indique une chute de pression du pneumatique.

3. Dispositif selon la revendication 1, caractérisé par le fait qu'un mécanisme de transmission (10) est prévu pour transmettre la course réglante (S) à un capteur (12) qui capte la course réglante (S).

4. Dispositif selon la revendication 3, caractérisé par le fait que le mécanisme de transmission (10) est formé d'une tringlerie (10), de préférence élastique, à la façon d'un câble flexible du type Bowden.

5. Dispositif selon la revendication 1, caractérisé par le fait que la course réglante (S) que produire l'organe réglant (4) sert à manoeuvrer un dispositif mécanique de signalisation avec lequel peut être produit un signal perceptible, optique ou acoustique.
